# EUROPEAN PATENT APPLICATION

(11) **EP 1 126 357 A2**
(43) Date of publication of application: **22.08.2001**
(21) Application number: 01400361.0
(22) Date of filing: 12.02.2001
(51) Int. Cl.: G06F 1/00

(54) **Portable recording medium and method of using portable recording medium**

(30) Priority: 15.02.2000 JP 2000036399
(71) Applicant: Base Technology Inc., Tokyo 160-0023 (JP)
(72) Inventor: Yamane, Shigeaki, c/o Base Technology, Inc, Tokyo 160-0023 (JP); Imajo, Tadahiro, c/o Base Technology, Inc, Tokyo 160-0023 (JP); Yoshida, Naokuni, c/o Base Technology, Inc, Tokyo 160-0023 (JP)
(74) Representative: Rousset, Jean-Claude

(57) **Abstract**

This invention makes it possible to conveniently use various application softwares with high portability and high security. A CD-RW comprises a read-only physical access protect area and a rewritable area in which data can be rewritten. A plurality of application softwares, a user authentication program for performing user authentication by fingerprint collation, a fingerprint authentication engine, and the like are stored in the physical access protect area. A registered fingerprint data and a fingerprint information in which a corresponding user ID is stored in a protect area, which can not be copied, of the rewritable area, so that user authentication by fingerprint collation and user of the application software after the authentication are completed in one CD-RW.

## Description

### FIELD OF THE INVENTION

The present invention relates to a portable recording medium and a technique of using the same and, more particularly, a technique effectively applied to a portable recording medium or the like in which an application software requiring advanced and various security managements is stored.

### BACKGROUND OF THE INVENTION

For example, with development of information networks such as so-called Internet and wide spreading of high-performance personal computers, electronic commerce, securities and financial services using personal computers as exchange terminals have spread.

Each of these various services using personal computers as exchange terminals is often performed such that a terminal software (application software) only for the corresponding services is installed in an external storage device such as a fixed disk drive (HDD) included in a specific personal computer.

When a terminal software is installed in a specific personal computer to use a service, a place where the corresponding service is available is limited to a place where the personal computer is established. This is a technical problem that is inconvenient for users.

In addition, prior to actual use of a service, a software must be installed in a personal computer. A general user who is poor in the knowledge of a personal computer is too hard to use the service. This is an obstacle to the spread of the services and lacks convenience.

On the other hand, in recent years, rewritable portable large-capacity storage medium represented by a CD-RW (Compact Disc-Rewritable), an MO (Magneto Optical disc), a DVD (Digital Versatile Disc), and the like have been able to be used. In particular, the CD-RW system is rapidly spread because the price of a medium and the price of a drive are low and because a CD-ROM of the previous generation can be used.

Therefore, terminal softwares only for various services are installed at once in the large-capacity portable medium such as a CD-RW, and an arbitrary terminal software is directly started from the CD-RW loaded on an arbitrary personal computer, so that a service that has high portability and is not limited to the position where the computer is established may be realized.

However, since a large-capacity portable medium has high portability, the large-capacity portable medium always has the risks of loss, theft, and the like. When the large-capacity portable medium is managed by a conventional password, security management for checking a user is insufficient. For this reason, it is worried to apply the large-capacity portable media to services such as electronic commerce, securities and financial services that require high security.

As countermeasures to the security, for example, a method of causing a user to set a complex password, the other technical problem is posed. That is, a load acting on the user is increased because of the password management, e.g., recitation, concealment, or the like of the password.

### SUMMARY OF THE INVENTION

It is an object of the present invention to provide a portable recording medium for making it possible to easily use various application softwares with high portability and high security and a technique of using the portable recording medium.

It is another object of the present invention to provide a portable recording medium for making it possible to easily use various application softwares with high portability and high security without giving a load such as password management to a user and a technique of using the portable recording medium.

It is still another object of the present invention to provide a portable recording medium for making it possible to use an application software at various license levels with high portability and high security and a technique of using the portable recording medium.

According to the present invention, personal identification information such as a fingerprint is registered in advance in a portable recording medium in which an application software is stored, and personal authentication using the personal identification information makes it possible that only a true uses the application software.

More specifically, the portable recording medium according to the present invention is designed to store an application software, personal identification information of a proper user of the application software and an authentication software for performing personal authentication using the personal identification information prior to the use of the application software by an arbitrary user.

According to a method of using a portable recording medium according to the present invention, in a portable recording medium in which an application software is stored, personal identification information of a proper user of the application software is stored, and personal authentication using the personal identification information is performed prior to the use of the application software in the portable recording medium by an arbitrary user so as to cause the proper user to use the application software stored in the portable recording medium.

According to a portable recording medium and a method of using a portable recording medium according to the present invention, an advantage of making it possible to conveniently use various application softwares with high portability and high security can be achieved.

According to a portable recording medium and a method of using a portable recording medium according to the present invention, without giving a load such as password management to a user, an advantage of making it possible to conveniently use various application softwares with high portability and high security can be achieved.

According to a portable recording medium and a method of using a portable recording medium according to the present invention, an advantage of making it possible to use an application software at various license levels with high portability and high security can be achieved.

### BRIEF DESCRIPTIONS OF THE DRAWINGS

FIG. 1 is a conceptual diagram showing an example of the configuration of a portable recording medium according to an embodiment of the present invention;
FIG. 2 is a flow chart showing an example of a method of using a portable recording medium according to an embodiment of the present invention;
FIG. 3 is a flow chart showing an example of a method of using a portable recording medium according to an embodiment of the present invention;
FIG. 4 is a flow chart showing an example of a method of using a portable recording medium according to another embodiment of the present invention;
FIG. 5 is a conceptual diagram showing an example of the configuration of an authentication server used in a method of using a portable recording medium according to another embodiment of the present invention; and
FIG. 6 is a conceptual diagram showing an example of the configuration of an information processing device such as a personal computer using a method of using a portable recording medium according to an embodiment of the present invention.

### DESCRIPTION OF THE PREFERRED EMBODIMENTS

Embodiments of the present invention will be described below in detail with reference to the accompanying drawings.

### (Embodiment 1)

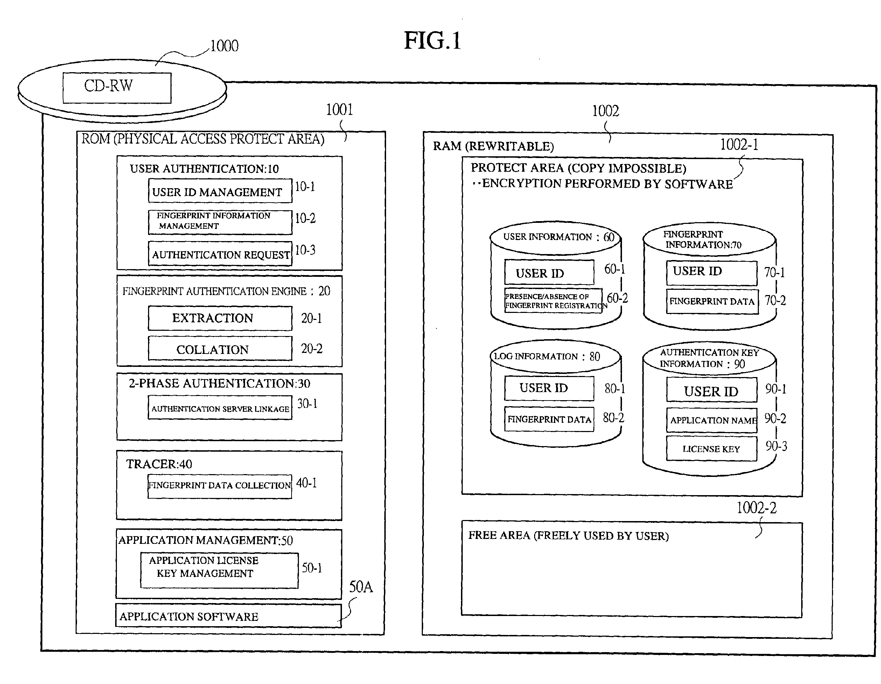

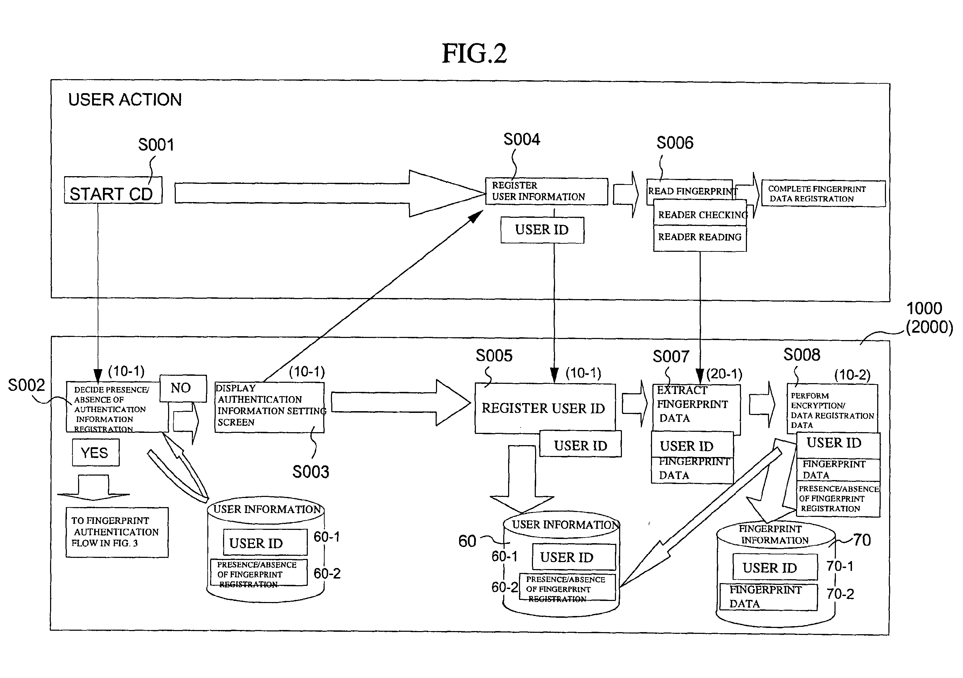

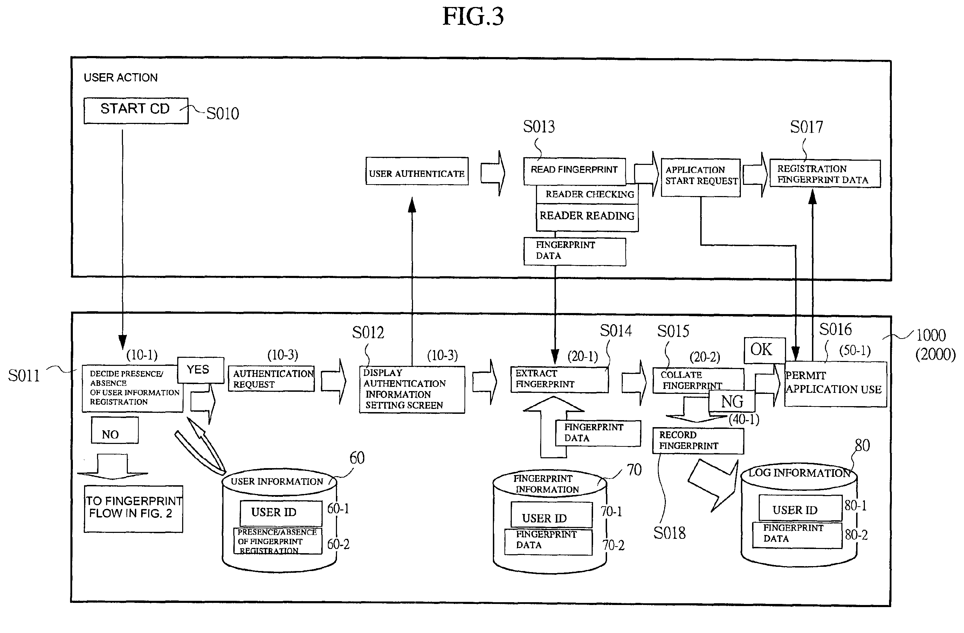

FIG. 1 is a conceptual diagram showing an example of the configuration of a portable recording medium according to an embodiment of the present invention, and FIGS. 2 and 3 are flow charts showing a method of using a portable recording medium according to the embodiment.

In this embodiment, as an example of a portable recording medium, a CD-RW will be exemplified.

A CD-RW 1000 according to the embodiment has a data storage region constituted by a read-only physical access protect area 1001 and a rewritable area 1002 in which data can be rewritten.

In the physical access protect area 1001, when various softwares (to be described later) are written, data writing is executed by using a rewritable data writing scheme, and it is impossible to perform falsification by rewriting or the like.

The rewritable area 1002 is constituted by a protect area 1002-1 in which written data is protected by encryption performed by a software and a free area 1002-2 which can be accessed by a user or an application program (to be described later).

The physical access protect area 1001 stores a user authentication program 10, a fingerprint authentication engine 20, a 2-phase authentication program 30, a tracer 40, an application management program 50, a plurality of application softwares 50A, and the like.

The user authentication program 10, as will be described later, is a software for performing a process of deciding a proper user on the basis of user fingerprint information input from the outside and fingerprint information which is registered in advance, and has the functions of a user ID management function 10-1, a fingerprint information management function 10-2, a authentication request function 10-3, and the like.

The fingerprint authentication engine 20 is a software for performing a collation process of fingerprint information under the control of the user authentication program 10. The fingerprint authentication engine 20 comprises functions such as a fingerprint data extraction function 20-1 for extracting pieces of characteristic information from the input fingerprint information and the registered fingerprint information; and a fingerprint collation function 20-2 for deciding if it is identified or not by collation of the pieces of characteristic information.

The 2-phase authentication program 30 is a software for performing such an authentication process that an external authentication server (to be described later) is requested to perform the collation of fingerprints, and comprises an authentication server linkage function 30-1 or the like.

The tracer 40 performs processes of monitoring and recording an authentication process by a fingerprint, and comprises a fingerprint data collection function 40-1 or the like for recording input fingerprint information or the like when authentication is a failure to subsequently perform analysis or the like of illegal access later.

The application management program 50 comprises an application license key management function 50-1 for limiting a available function or the like with respect to the various application softwares 50A depending on a license key or the like obtained from an authentication server or the like in the 2-phase authentication program 30 (to be described later).

As the application softwares 50A, for example, a banking transaction software for supporting a service related to a settlement transaction with a bank; an asset management software for performing an operating management service of investment trusts, stocks, and other financial products; a life planning software for performing insurance product services; a financial information software for providing investment-related information, corporate information, and the like; and an electronic commerce software for performing electronic commerce and the like, can be stored.

User information 60, fingerprint information 70, log information 80, authentication key information 90, and the like are stored in the protect area 1002-1 of the rewritable area 1002.

The user information 60 is constituted by pieces of information such as a user ID 60-1 and a fingerprint registration presence/absence flag 60-2 which are uniquely given to respective users.

The fingerprint information 70 is constituted by pieces of information such as a user ID 70-1 and fingerprint data 70-2 or the like which are obtained in the following registration process.

The log information 80 is constituted by pieces of information such as user ID 80-1, fingerprint data 80-2, and date data (not shown) which are obtained when collation in a fingerprint authentication process is a failure.

The authentication key information 90 is constituted by pieces of information such as a user ID 90-1, an application software name 90-2, and a license key 90-3.

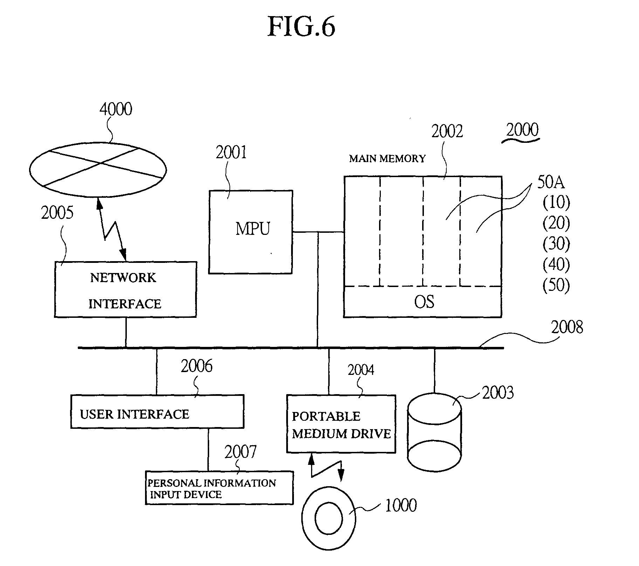

FIG. 6 is a conceptual diagram showing an example of the configuration of an information processing device such as a personal computer used in a method of using a portable recording medium according to this embodiment.

In a personal computer 2000 in FIG. 6, reference numeral 2001 denotes a microprocessor (MPU); 2002, a main memory in which a software and data executed in the microprocessor 2001 are stored; 2003, an external storage device such as a fixed disk drive (HDD); 2004, a portable medium drive such as a CD-ROM drive or a CD-RW drive for input/output data to/from the CD-RW 1000 loaded from the outside; 2005, a network interface connected to an information network such as the Internet; 2006, a user interface; 2007, a personal identification information input device for receiving personal identification information such as a fingerprint; and 2008, a bus to which these components are connected.

The personal identification information input device 2007, for example, may be a device integrated with a display, a keyboard, a mouse, and the like constituting the user interface 2006 or may be a device being independent of the display, the keyboard, the mouse, and the like.

In the main memory 2002, for example, a general-purpose operating system 2002a for a personal computer is resident. On the general-purpose operating system 2002a, the main memory 2002 is loaded from the CD-RW 1000, and the application softwares 50A are operated.

An example of the portable recording medium according to this embodiment and the method of using the portable recording medium will be described below. Reference numerals in parentheses in FIG. 2 denote the reference numerals of programs and functions for executing the processes.

The process of registering the fingerprint information of a proper user on the CD-RW 1000 will be described below with reference to the flow chart in FIG. 2. This registering process keeps its security such that, for example, the registering process is performed by the proper user under the control of a provider when the application software 50A or the like is stored in the CD-RW 1000 to be provided to the user.

The user of the CD-RW 1000 loads the CD-RW 1000 on the portable medium drive 2004 to cause a medium automatic start mechanism of the OS 2002a to start the CD-RW 1000, and loads the user authentication program 10, the fingerprint authentication engine 20, and the like on the main memory 2002 to execute the user authentication program 10, the fingerprint authentication engine 20, and the like (step S001).

The start of the CD-RW 1000 is not performed by using only the medium automatic start mechanism of the OS 2002a. The start of the CD-RW 1000 may be performed such that a menu program is started to select the start of the CD-RW 1000 from the menu program.

The user ID management function 10-1 of the user authentication program 10 decides whether a fingerprint has been registered or not with reference to the fingerprint registration presence/absence flag 60-2 of the user information 60 (step S002). If the fingerprint has not been registered, an authentication information setting screen for urging a user to register a fingerprint is shown to the user (step S003).

The user who saw the screen inputs a user ID of a predetermined form (step S004). The input user ID is written in the user information 60 as the user ID 60-1 by the user ID management function 10-1 (step S005).

The user causes the personal identification information input device 2007 to read the fingerprint of the user (step S006). Characteristic information is extracted from the read fingerprint information by the fingerprint data extraction function 20-1 of the fingerprint authentication engine 20 started by the user authentication program 10 (step S007). The extracted fingerprint data is encrypted by the fingerprint information management function 10-2, and then stored together with the user ID in the fingerprint information 70 as the user ID 70-1 and the fingerprint data 70-2 (step S008), so that the fingerprint data registering process is completed.

An example of a method of using an application software at an arbitrary opportunity after the registration described above.

The user of the CD-RW 1000 loads the CD-RW 1000 on the portable medium drive 2004 of the nearest personal computer 2000 to cause the medium automatic start mechanism of the OS 2002a to start the CD-RW 1000, and loads the user authentication program 10, the fingerprint authentication engine 20, and the like on the main memory 2002 to execute the user authentication program 10, the fingerprint authentication engine 20, and the like (step S010).

The user ID management function 10-1 of the user authentication program 10 refers to the fingerprint registration presence/absence flag 60-2 of the user information 60 to confirm that the fingerprint has registered (step S011). The user ID management function 10-1 shows a fingerprint authentication screen for urging the user to execute a fingerprint reading process to user to perform fingerprint authentication for deciding whether the user is a proper user or not (step S012).

The user who saw the screen inputs the fingerprint of the user from the personal identification information input device 2007 (step S013). Characteristic information is extracted from the read fingerprint as fingerprint data by the fingerprint data extraction function 20-1 of the fingerprint authentication engine 20. At the same time, the fingerprint data extraction function 20-1 reads the registered fingerprint data 70-2 from the fingerprint information 70 (step S014). The fingerprint collation function 20-2 performs a collation decision to check if it is identified or not between the input fingerprint data and the registered fingerprint data 70-2 (step S015). If it is determined that the fingerprint data is identified with each other, a start request of an arbitrary application software 50A is accepted from the user to permit the use of the application software 50A (step S016). The application software 50A is read from the CD-RW 1000 and started to be used by the user (step S017).

By using a free region of the protect area 1002-1 of the CD-RW 1000, the started application software 50A encrypts and writes data required for the operation and data required for security management among data generated during the operation. The other data are recorded by using the free area 1002-2. In this manner, the application software 50A is operated by only the CD-RW 1000.

Unlike the above description, the application software 50A is not only started and caused to be used. For example, an arbitrary application software 50A and license level information for a specific user specified by a user ID may be set in a part of the user information 60 or the fingerprint information 70, and functions which can be used by the application software 50A may be limited at the start of step S016.

If it is decided not-identified in step S015, pieces of passage information such as input fingerprint data, a user ID, and date data are recorded as the log information 80 (step S018). With reference to the log information 80, tracing and analyzing the progress of use of the CD-RW 1000 and illegal use can be appropriately performed.

In the above deciding process, step S013 to step S015 and step S018 are repeated a predetermined set number of times. When the number of times exceeds the predetermined set number of times, a process of making the subsequent use of the CD-RW 1000 impossible may be added.

In this manner, according to the CD-RW 1000 of this embodiment and the method of using the CD-RW 1000, user authentication is performed by using personal identification information such as fingerprints and the like registered in the CD-RW 1000 in advance. For this reason, without user's burden about control of password and the like, identity can be guaranteed, and high security can be realized. In addition, since all application softwares 50A required to provide services are stored in the CD-RW 1000 serving as a portable medium, in addition to the high portability which is an advantage of the CD-RW 1000, the easy use of the various application softwares 50A stored in the CD-RW 1000 can be advantageously made possible.

More specifically, when a user holding the CD-RW 1000 only loads the CD-RW 1000 on the nearest personal computer 2000, an arbitrary service that requires high security can be received.

As a result, the CD-RW 1000 can be reliably used to store and use the application software 50A which requires high security in electronic commerce, financial transaction, and the like. An improvement in convenience on a user side and a service provider side by high security and high portability can be realized.

### (Embodiment 2)

Another embodiment of a method of using a portable recording medium according to the present invention will be described below.

In the above description of Embodiment 1, by using the user authentication program 10 or the like stored in the CD-RW 1000, an authentication process is performed in a closed state in the CD-RW 1000. However, when an external server or the like is requested to perform collation of fingerprints and the authentication process, authentication management or the like in use of the various application softwares 50A can also be realized. An example of a method of using the CD-RW 1000 described above will be described below.

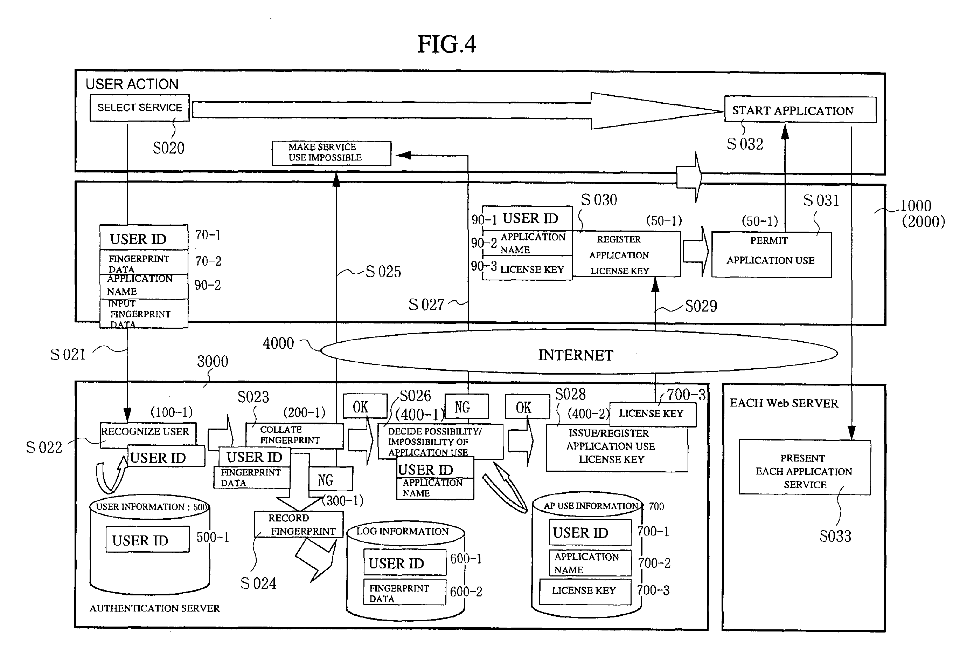

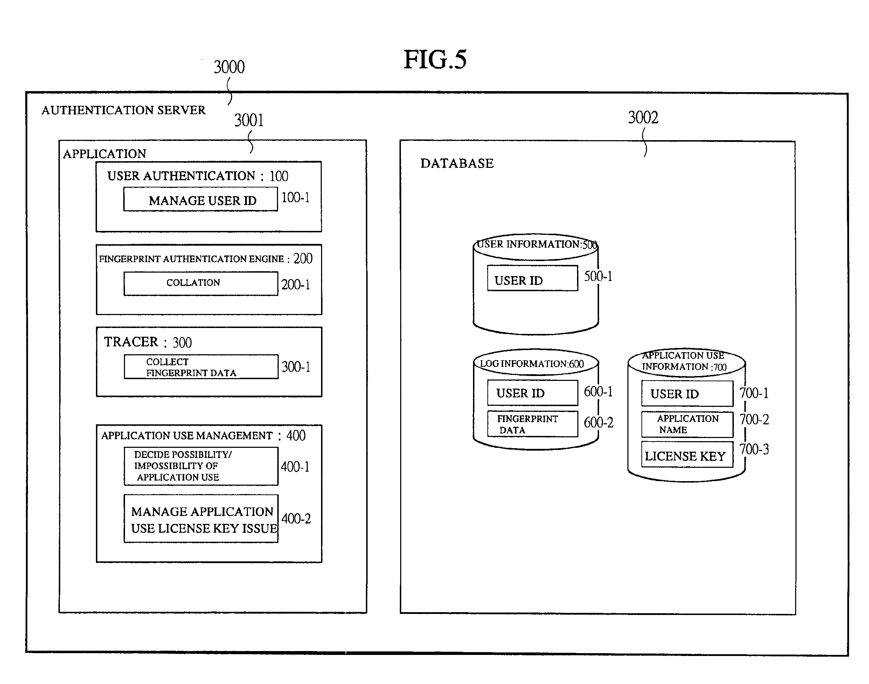

FIG. 4 is a flow chart showing an example of a method of using a portable recording medium according to Embodiment 2 of the present invention, and FIG. 5 is a conceptual diagram showing an example of the configuration of an authentication server used in Embodiment 2.

The same reference numerals as in Embodiment 1 denote the same parts in Embodiment 2, and a repetitive description will be omitted.

First, a configuration of an authentication server 3000 according to Embodiment 2 will be described below, referring to FIG. 5. The authentication server 3000 comprises a user authentication program 100, a fingerprint authentication engine 200, a tracer 300, and an application use management program 400.

The user authentication program 100 comprises a user ID management function 100-1.

The fingerprint authentication engine 200 comprises a fingerprint collation function 200-1.

The tracer 300 comprises a fingerprint data collection function 300-1.

The application use management program 400 comprises an application use possibility/impossibility decision function 400-1 and an application use license key issue management function 400-2.

The authentication server 3000 comprises, as a database 3002, user information 500, a log information 600, application use information 700, and the like.

In the user information 500, a user ID 500-1 registered and managed by a manager of the authentication server 3000 is recorded.

In the log information 600, a user ID 600-1 obtained in an authentication process in which fingerprint authentication is a failure, a fingerprint data 600-2, date data (not shown), and the like are recorded.

In the application use information 700, a plurality of user IDs 700-1 registered and managed by a manager of the authentication server 3000; an application software name 700-2 of an application software 50A the use of which is permitted in accordance with the user IDs 700-1; a license key 700-3 representing the possibility/impossibility of the use and a usage level permitted and set for the user of the user IDs 700-1 with respect to the application software 50A, and the like are stored to correspond to each other.

An example of the operation of Embodiment 2 will be described below with reference to the flow chart in FIG. 4. Reference numerals in parentheses in FIG. 4 denote the reference numerals of programs and functions for executing the processes.

The start of the CD-RW 1000 is the same as that in Embodiment 1. However, in Embodiment 2, a user authentication program 10 and a 2-phase authentication program 30 are used. A menu program (not shown) for service selection is started, and, at the entrance of each actual service, fingerprint authentication using the authentication server 3000 is performed by the user authentication program 10 and the 2-phase authentication program 30.

More specifically, when a service using an arbitrary application software 50A at the start of the CD-RW 1000 is selected, an input process of a user ID and a fingerprint from a user is executed by the user authentication program 10 (step S020). The fingerprint data input by the user; the user ID 70-1 and the fingerprint data 70-2 registered in the CD-RW 1000 in advance by the process of the flow chart in FIG. 2; and the application software name 90-2 serving as the name of the application software 50A started by the corresponding service, are transmitted to the authentication server 3000 by the authentication server linkage function 30-1 of the 2-phase authentication program 30 (step S021).

The authentication server 3000, which receives these data, performs user confirmation by collation between the user ID 500-1 and the user ID 70-1 in the user authentication program 100 (step S022). Thereafter, the authentication server 3000 collates the fingerprint data input by the user with the registered fingerprint data 70-2 (step S023).

If the fingerprint data is not identified with each other, the fingerprint data or the like received from the user (personal computer 2000) side is recorded together with date data or the like (step S024). It is answered to the user that the use of the corresponding service be impossible (step S025).

If the fingerprint data is identified with each other, the possibility/impossibility of the use of the application software 50A by the user is decided with reference to the application use information 700 by using the application software name 90-2 and the user ID 70-1 received from the user side as keys (step S026). When the user ID 70-1 is not registered in the application use information 700, it is answered to the user that the use of the corresponding service be impossible (step S027).

When the user ID 70-1 is registered in the application use information 700, the corresponding license key 700-3 is read from the application use information 700 (step S028), and is transmitted to the application license key management function 50-1 on the user side (step S029).

The application license key management function 50-1 on the user side registers the license key 700-3 and the user ID 70-1 in the authentication key information 90 in the CD-RW 1000 as the user ID 90-1 and the license key 90-3, which are registered together with the application software name 90-2 (step S030). In addition, the user is permitted to use the application software 50A corresponding to the application software name 90-2 (step S031). The application software 50A is started from the CD-RW 1000 (step S032).

The user uses the started application software 50A to access a Web server (not shown) of a providing source of each service, for example, through Internet 4000 to be provided with the desired services (step S033).

As described above, according to Embodiment 2, the same effect as that in Embodiment 1 can be obtained, and various usage levels can be set for respective users and respective application softwares 50A by setting the license key 700-3 of the application use information 700 on the authentication server 3000 side.

Since the log information 600 remains on the authentication server 3000 side, analysis of illegal use and security management of the CD-RWs 1000 owned by respective users can be more correctly performed.

As described above, the invention made by the present inventor has been described on the basis of the embodiments. However, the present invention is not limited to the embodiments described above. Various changes and modifications can be effected without departing from the spirit and scope of the invention, as a matter of course.

For example, as personal identification information, not only a fingerprint, but also pieces of information such as a voice print, countenance, a retina pattern, the strength of a brushstroke, and handwriting that can perform personal identification at a high level can be used.

As the portable recording medium, not only a CD-RW, a portable recording medium such as an MO or a DVD and a nonvolatile semiconductor memory or the like may be used.

## Claims

1. A portable recording medium storing an application software, personal identification information of a proper user of the application software, and an authentication software for performing personal authentication using the personal identification information prior to the use of the application software by an arbitrary user.

2. A portable recording medium according to claim 1, wherein the application software and the authentication software are stored in a read-only region of the portable recording medium, and the personal identification information is encrypted and stored in a rewritable region of the portable recording medium.

3. A portable recording medium according to claim 2, wherein the authentication software includes at least one of a first authentication function for collating the personal identification information stored in the portable recording medium with personal identification information input by the arbitrary user to perform the personal authentication; and a second authentication function for requesting an external authentication server through an information network to collate the personal identification information stored in the portable recording medium with the personal identification information input by the arbitrary user and for performing the personal authentication by receiving a collation result from the authentication server.

4. A portable recording medium according to claim 2, wherein the personal identification information is fingerprint information of the user.

5. A portable recording medium according to claim 4, wherein the authentication software includes at least one of a first authentication function for collating the personal identification information stored in the portable recording medium with personal identification information input by the arbitrary user to perform the personal authentication; and a second authentication function for requesting an external authentication server through an information network to collate the personal identification information stored in the portable recording medium with the personal identification information input by the arbitrary user and for performing the personal authentication by receiving a collation result from the authentication server.

6. A portable recording medium according to claim 1, wherein the authentication software includes at least one of a first authentication function for collating the personal identification information stored in the portable recording medium with personal identification information input by the arbitrary user to perform the personal authentication; and a second authentication function for requesting an external authentication server through an information network to collate the personal identification information stored in the portable recording medium with the personal identification information input by the arbitrary user and for performing the personal authentication by receiving a collation result from the authentication server.

7. A portable recording medium according to claim 6, wherein the personal identification information is fingerprint information of the user.

8. A portable recording medium according to claim 1, wherein the personal identification information is fingerprint information of the user.

9. A method of using a portable recording medium, wherein, in a portable recording medium in which an application software is stored, personal identification information of a proper user of the application software is stored; and personal authentication using the personal identification information is performed prior to the use of the application software in the portable recording medium by an arbitrary user so as to cause the proper user to use the application software stored in the portable recording medium.

10. A method of using a portable recording medium according to claim 9, wherein the personal authentication is performed by using an authentication software stored in the portable recording medium together with the application software.

11. A method of using a portable recording medium according to claim 9, wherein the personal identification information is fingerprint information of the user.

12. A method of using a portable recording medium according to claim 10, wherein the authentication software stored in the portable recording medium together with the application software includes at least one of a first authentication function for collating the personal identification information stored in the portable recording medium with personal identification information input by the arbitrary user to perform the personal authentication; and a second authentication function for requesting an external authentication server through an information network to collate the personal identification information stored in the portable recording medium with the personal identification information input by the arbitrary user and for performing the personal authentication by receiving a collation result from the authentication server.

13. A method of using a portable recording medium according to claim 12, wherein the authentication server has a license database storing the pieces of personal identification information and license keys of the respective application softwares which correspond to each other, and responds to the second authentication function of the authentication software by using the license key corresponding to the personal identification information as the collation result to limit a function of using the application software stored in the portable recording medium.

14. A method of using a portable recording medium according to claim 13, wherein the personal identification information is fingerprint information of the user.

15. A method of using a portable recording medium according to claim 12, wherein the personal identification information is fingerprint information of the user.

16. A method of using a portable recording medium according to claim 10, wherein the personal identification information is fingerprint information of the user.
